# EUROPEAN PATENT APPLICATION

(11) **EP 4 718 601 A1**
(43) Date of publication of application: **01.04.2026**
(21) Application number: 24202633.4
(22) Date of filing: 25.09.2024
(51) Int. Cl.: H01M 50/209, H01M 50/242, H01M 50/249, H01M 50/289, H01M 50/291

(54) **CELL SWELLING COMPENSATOR**

(71) Applicant: VOLVO TRUCK CORPORATION, 405 08 Göteborg (SE)
(72) Inventor: KARSTRÖM, Fredrik, Mölnlycke (SE); LEBEDEVA, Svetlana, Mölnlycke (SE); ÖIJER, Fredrik, Västra Frölunda (SE)
(74) Representative: Ström & Gulliksson AB

(57) **Abstract**

A cell swelling compensator for a battery unit, comprising one or more resilient elements adapted to be arranged between a first cell stack and a structure of the battery unit such that said cell swelling compensator is arranged between the first cell stack and the structure for exerting a force onto first cell stack for compensating for cell swelling in the first cell stack.

## Description

### TECHNICAL FIELD

The disclosure relates generally to cells swelling in a battery unit. In particular aspects, the disclosure relates to a cell swelling compensator, and advantageously a cell swelling compensator for a battery unit for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Within the field of electrically propelled vehicles, large batteries are commonly formed by multiple smaller cells stacked together to form battery modules. The batteries are commonly provided with Prismatic Li-ion cells. Such Li-ion cells have a large energy density but swells and shrinks during charging and discharging. During their lifetime, irreversible processes may occur in the Li-ion cells which commonly leads to the Li-ion cells expanding. This requires the battery unit comprising the cells to be provided with functionality for accommodating the swelling while enabling the cells to be kept securely in position relative to the housing and in relation to each other. This is particularly challenging within the field of electrically propelled vehicle as such vehicles requires large amounts of energy onboard.

### SUMMARY

According to a first aspect of the disclosure a cell swelling compensator for a battery unit is provided. The cell swelling compensator comprises one or more resilient elements adapted to be arranged between a first cell stack and a structure of the battery unit such that said cell swelling compensator is arranged between the first cell stack and the structure for exerting a force onto first cell stack for compensating for cell swelling in the first cell stack. The first aspect of the disclosure may seek to achieve a simple and non-complex manner of allowing for compensating of swelling of a cell stack. A technical benefit may include that the cell swelling compensator accommodates for swelling of the cell stack while providing sufficient support for cell stack upon the cell stack shrinking.

Optionally in some examples, including in at least one preferred example, the structure may be a second cell stack of the battery unit, wherein the cell swelling compensator may be adapted to be arranged between said first and second cell stack for exerting a force onto the first and second cell stack for compensating for cell swelling in the first and second cell stack. A technical benefit may include utilizing one cell swelling compensator to compensate for the swelling of both the first and the second cell stacks.

Optionally in some examples, including in at least one preferred example, the structure may be a housing of the battery unit. A technical benefit may include that the rigidity of the housing provides additional stability to the cell swelling compensator by acting as a rigid support for the deformation of said cell swelling compensator.

Optionally in some examples, including in at least one preferred example, the one or more resilient elements may be adapted to provide a variable stiffness depending on the displacement of said one or more resilient elements. A technical benefit may include that the compensating characteristics of the cell swelling compensator may adapt depending on the swelling of the first cell stack, thereby allowing for more efficient compensating.

Optionally in some examples, including in at least one preferred example, the one or more resilient elements may be adapted to provide an increased stiffness upon an increase in displacement of said one or more resilient elements. A technical benefit may include that the cell swelling compensator may allow for cyclic swelling while providing a sufficient counteracting force for irreversible swelling.

Optionally in some examples, including in at least one preferred example, the one or more resilient elements may be adapted to provide an increased stiffness upon the compression of the one or more resilient elements exceeding a compression threshold. A technical benefit may include that the cell swelling compensator may allow for cyclic swelling while providing a sufficient counteracting force for irreversible swelling in a simple and non-complex manner.

Optionally in some examples, including in at least one preferred example, the cell swelling compensator may further comprise a plurality of resilient elements arranged such that said resilient elements are engaged at different levels of compression of a resilient structure formed by said resilient elements to provide the increased stiffness at the compression threshold. A technical benefit may include that the compression threshold may be achieved in a simple and reliable manner.

Optionally in some examples, including in at least one preferred example, the one or more resilient elements may comprise a plurality of resilient elements arranged such that the resilient elements will start to deform at different relative distances between the first cell stack and the structure to provide the variable stiffness. A technical benefit may include that the variable stiffness may be provided in a reliable and non-complex manner.

Optionally in some examples, including in at least one preferred example, the one or more resilient elements may comprise a plurality of releasably interconnected resilient elements. The stiffness will depend upon the choice of resilient elements, this allows for the possibility to customize the stiffness and compression behavior of the cell swelling compensator. A technical benefit may thus include that the cell swelling compensator may be modularly adaptable to provide desirable compensating characteristics.

Optionally in some examples, including in at least one preferred example, the cell swelling compensator may further comprise a first plate forming an end portion of the cell swelling compensator and adapted to face the structure or the first cell stack of the battery unit. A technical benefit may include that the first plate allows a more even pressure distribution and support the first cell stack more evenly.

Optionally in some examples, including in at least one preferred example, the one or more resilient elements may comprise a plurality of leaf springs stacked on top of each other along a stacking axis. A technical benefit may include that a more compact cell swelling compensator may be provided.

Optionally in some examples, including in at least one preferred example, the plurality of leaf springs may each comprise a curved portion adapted to face the structure and the first cell stack. A technical benefit may include that a more space-efficient cell swelling compensator may be achieved.

Optionally in some examples, including in at least one preferred example, the plurality of leaf springs may be clamped together by means of one or more clamping members. A technical benefit may include that unwanted relative movement between the leaf springs may be mitigated allowing more reliable swelling compensation.

Optionally in some examples, including in at least one preferred example, the cell swelling compensator may further comprise a mounting member extending parallel to the stacking axis and adapted to provide a stop for movement of the leaf springs stacked on top of each other in a direction extending orthogonally to said stacking axis. A technical benefit may include that unwanted relative movement between the leaf springs may be mitigated allowing more reliable swelling compensation.

Optionally in some examples, including in at least one preferred example, the plurality of leaf springs may comprise leaf springs with different curvatures and/or dimensions for providing a desired stiffness in response to the displacement of said leaf springs. A technical benefit may include that the cell swelling compensator may be adapted to provide a desired stiffness response.

Optionally in some examples, including in at least one preferred example, the plurality of leaf springs may comprise leaf springs with different curvatures and/or dimensions for providing a variable stiffness depending on the displacement of said leaf springs. A technical benefit may include that the variable stiffness may be provided in a space-efficient manner.

Optionally in some examples, including in at least one preferred example, the plurality of leaf springs may comprise leaf springs with different and/or dimensions for providing a constant stiffness relative to the displacement of said leaf springs.

Optionally in some examples, including in at least one preferred example, the one or more resilient elements may further comprise a first plurality of leaf springs stacked on top of each other along a first stacking axis and a second plurality of leaf springs stacked on top of each other along a second stacking axis coinciding with the first stacking axis. A technical benefit may include that it allows for the stiffness provided by the cell swelling compensator to be easier to tune for a particular application and/or that the stiffness may be provided in a space efficient manner.

Optionally in some examples, including in at least one preferred example, the curved portion of each of the second plurality of leaf springs may be arranged in an opposite direction relative to the curved portion of each of the first plurality of leaf springs. A technical benefit may include that, if the curved portions are convex relative to each other, it may allow for the curved portions of the first and second plurality of leaf springs to be mounted to each other in a simple manner, for example by means of a fastening element. A technical benefit may include that, if the curved portions are concave relative to each other, the pressure exerted by the leaf springs on the battery unit may be more even. If the cell-swelling compensator comprises an end plate, a technical benefit may include that the pressure exerted by the leaf springs on the end plate may be more centered causing less bending of the end plate in turn causing a more even pressure distribution on the battery unit.

Optionally in some examples, including in at least one preferred example, the one or more resilient members may further comprise one or more elastic bushing or coil spring arranged on an outer surface of the leaf springs stacked on top each other facing the structure or the first cell stack. A technical benefit may include that the adaptability of the cell swelling compensator may be further improved, as the elastic bushing or coil spring may provide additional possibilities to adapt the cell swelling compensator depending on for example design needs, available space and production cost.

Optionally in some examples, including in at least one preferred example, the one or more resilient element may comprise a leaf spring provided as a wave spring. A technical benefit may include that a more compact cell swelling compensator may be achieved.

Optionally in some examples, including in at least one preferred example, the one or more resilient element may further comprise one or more resilient member mounted to the wave spring. A technical benefit may include that the cell swelling compensator may be modularly adaptable to provide desirable compensating characteristics.

Optionally in some examples, including in at least one preferred example, the structure may be a housing of the battery unit, wherein the one or more resilient elements may be adapted to provide a variable stiffness depending on the displacement of said one or more resilient elements and wherein the one or more resilient elements may be adapted to provide an increased stiffness upon the compression of the one or more resilient elements exceeding a compression threshold, the cell swelling compensator may further comprise a plurality of resilient elements arranged such that said resilient elements are engaged at different levels of compression of a resilient structure formed by said resilient elements to provide the increased stiffness at the compression threshold, the plurality of resilient elements may be arranged such that the resilient elements will start to deform at different relative distances between the first cell stack and the housing to provide the variable stiffness.

According to a second aspect of the disclosure a battery system may be provided. The battery system comprises a first cell stack and a cell swelling compensator of any of the examples described herein. The second aspect of the disclosure may seek to achieve a more durable and reliable battery system. A technical benefit may include that the cell swelling compensator accommodates for swelling of the cell stack while providing sufficient support for cell stack upon the cell stack shrinking.

According to a third aspect of the disclosure a vehicle is provided. The vehicle comprises a battery system of any of the examples described herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle comprising a battery system according to an example.
**FIG. 2A** is a schematic front view of a battery system according to an example.
**FIG. 2B** is a schematic front view of a cell swelling compensator according to an example.
**FIG. 2C** is a schematic front view of a cell swelling compensator according to another example.
**FIG. 2D** is a schematic front view of a cell swelling compensator according to an example.
**FIG. 3** is a schematic graph of the force as a function of compression for a cell swelling compensator according to an example.
**FIG. 4** is a perspective view of a cell swelling compensator according to an example.
**FIG. 5** is a perspective view of a cell swelling compensator according to an example.
**FIG. 6A** is a schematic side view of a cell swelling compensator according to an example.
**FIG. 6B** is a schematic side view of a cell swelling compensator according to an example.
**FIG. 6C** is a schematic side view of a cell swelling compensator according to an example.
**FIG. 6D** is a schematic side view of a cell swelling compensator according to an example.
**FIG. 7** is a schematic side of a cell swelling compensator according to an example.
**FIG. 8** is a schematic side of a cell swelling compensator according to an example.
**FIG. 9** is a schematic side of a cell swelling compensator according to an example.
**FIG. 10** is a schematic side of a cell swelling compensator according to an example.
**FIG. 11** is a schematic side of a cell swelling compensator according to an example.
**FIG. 12A** is a schematic side of a cell swelling compensator according to an example.
**FIG. 12B** is a schematic perspective view of the cell swelling compensator of **FIG. 12****.**

### DETAILED DESCRIPTION

The detailed description set forth below provides information and examples of the disclosed technology with sufficient detail to enable those skilled in the art to practice the disclosure.

Electrically propelled vehicles, i.e. vehicles that are propelled by means of an electrical motor commonly requires energy storage units in the form of batteries to power the electrical motor. The batteries are associated with challenges as they are heavy and space consuming and are subjected to both cyclic and irreversible swelling which may subject the battery device to large loads and irreversible damage.

The present disclosures relate to a cell swelling compensator for accommodating the swelling behavior of the one or more cell stack of a battery unit.

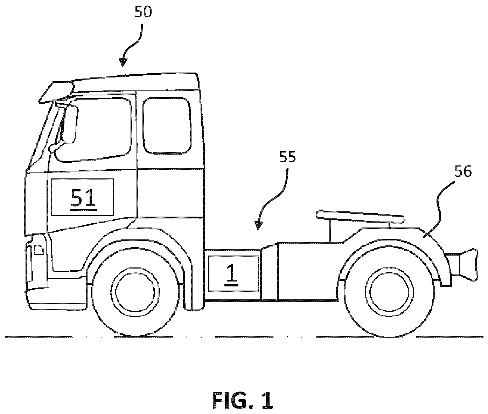

**FIG. 1** is an exemplary vehicle **50** which may comprise a battery unit **1** according to an example. In the depicted example, the vehicle **50** is a truck but it may be envisioned that the vehicle may be any type of vehicle. Preferably, the vehicle may be a heavy-duty vehicle, such as truck, bus or construction equipment, among other vehicle types. It may also be envisioned that the battery unit **1** is utilized for a marine vessel such as a boat or a motor and preferably an electrical motor configured to be powered by the battery unit **1.** It may also be envisioned that the battery unit **1** may be utilized for a stationary system such as a building and/or a stationary machinery. Accordingly, the battery unit **1** may be for a vehicle **50,** marine vessel, motor or a stationary system including a building and/or a stationary machinery. The battery unit **1** may be for an energy storage system of such a vehicle **50,** marine vessel, motor or stationary system.

The vehicle **50** may comprise an electric motor **51** configured to propel the vehicle **50.** The vehicle **50** may comprise a chassis **55** and the battery unit **1** may be adapted to be mounted to said chassis **55.** In the depicted example, the chassis **55** may comprise a frame **56.** Advantageously, the battery unit **1** may be adapted to be mounted to said frame **56.**

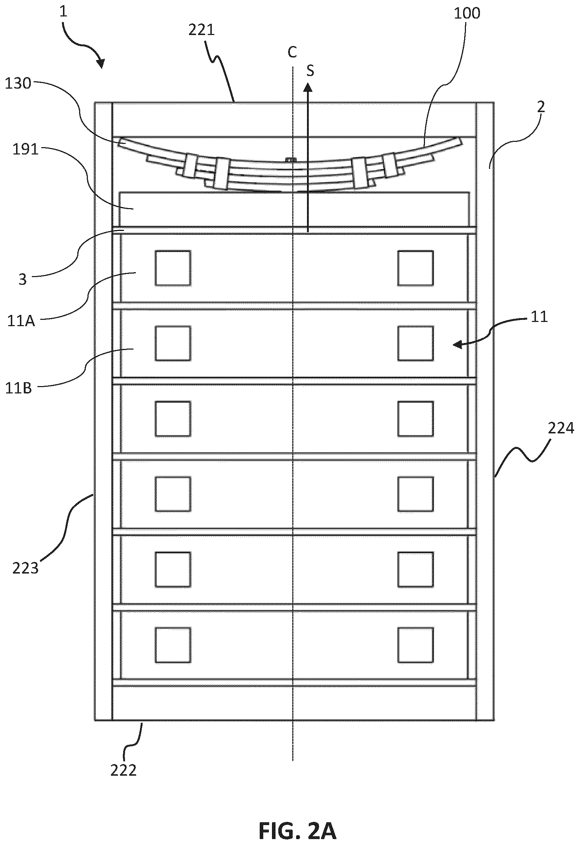

**FIG. 2A** depicts the battery unit **1** in further detail. The battery unit **1** is for the vehicle **50.** As will be explained in further detail later on, the battery unit **1** may comprise a cell swelling compensator **100.** Although it is only described with reference to a battery unit **1,** it may be envisioned that the cell swelling compensator **100** described herein may be used for other components than battery units.

In one example, the cell swelling compensator **100** and the battery unit **1** may form a battery system. In one example, the vehicle **50** may comprise the battery system.

The design and functionality of battery units are well-known for the skilled person and will not be described in lengthy detail. It may however be envisioned that the battery unit **1** comprises one or more cell stacks **11.** It may further be envisioned that the battery unit **1** comprises electrical connections for connecting the battery module **1** to an electrical consumer. In one example, the battery unit **1** may be configured to power the electrical motor **51** of the vehicle **50.** Hence, the electrical consumer may be the electrical motor **51** of the vehicle **50.** It may also be envisioned that battery unit **1** is configured to power a plurality of consumers including the electrical motor **51** and electrically powered auxiliaries.

The battery unit **1** may comprise a housing **2.** The housing **2** may be configured to be mounted to the chassis **55** of the vehicle **50** and preferably the frame **56** of the chassis **55.** In one example, the housing **2** may comprise an interface adapted to be mounted to the chassis **55** by means of one or more fasteners. As the skilled person realizes, the housing **2** may be mountable to the chassis **55** in a multitude of ways readily available and commonly known.

The housing **2** may be configured to accommodate the one or more cell stacks **11.** The housing **2** may form a container for the one or more cell stacks **11.** In the depicted example, the housing **2** forms a first side wall **221** and a second side wall **222.** The second side wall **222** may be arranged opposite to the first side wall **221.** The one or more cell stacks **11** may be mounted between the first side wall **221** and the second side wall **222.**

In one example, the housing **2** may comprise a third side wall **223** and a fourth side wall **224.** The third side wall **223** and the fourth side wall **224** may be arranged substantially perpendicular to the first side wall **221** and the second side wall **222.** The third and side wall **223** and the fourth side wall **224** may connected the first side wall **221** and the second side wall **222.** The fourth side wall **224** may be arranged opposite to the third side wall **223.** The third side wall **223** and the fourth side wall **224** may extend substantially parallel to the one or more battery modules **1.** The first, second, third and fourth side wall may together form a rectangular structure. Although the housing is depicted as a rectangular housing, the housing may depending on the requirements of the implementation be in any suitable shape and preferably in a shape allowing it to provide sufficient protection for the one or more cell stacks **11.**

In one example, the housing **2** may be provided with a front cover. In one example, the housing **2** may be provided with a rear cover. The front cover and/or the rear cover may be removably mounted to housing **2** and/or movable relative to the housing **2** to control access to the interior of the housing **2.**

The housing **2** may be adapted to support a plurality of cell stacks **11.** In the depicted example, the housing **2** is adapted to support six cell stacks **11.** The cell stacks **11** may be arranged in a stacked configuration. Accordingly, the plurality of cell stacks **11** may be arranged in parallel to each other and distributed along a common center axis **C.**

Each cell stack **11** may be arranged in a separate module, e.g. a battery module. The battery unit **1** may thus comprise one or more battery modules arranged as aforementioned. Each module may comprise a cell stack and a casing encapsulating the cell stack.

In the depicted examples, the plurality of cell stacks **11** are arranged one on top of the other but it may be envisioned that a plurality of cell stacks **11** are arranged side by side.

A cell swelling compensator **100** is for the battery unit **1** is provided. The cell swelling compensator comprises one or more resilient element **130.** The one or more resilient element **130** is adapted to be arranged between a first cell stack **11A** and a structure of the battery unit **1** such that the cell swelling compensator **100** is arranged between the first cell stack **11A** and the structure for exerting a force onto the first cell stack **11A** for compensating for cell swelling in the first cell stack **11A.**

The resilient element **130** thus presses resiliently against the first cell stack **11A** accommodating for swelling in the first cell stack **11A.** The resilient element **130** may further enable the first cell stack **11A** to be secured in position even during shrinkage due to resiliently pressing against said first cell stack **11A.**

The cell swelling compensator **100** may be adapted to compensate for cell swelling in a swelling direction **s.** The swelling direction **s** may extend distally from the first cell stack **11A.** The swelling direction **s** may extend distally from the first cell stack **11A** towards the structure.

The structure may be any suitable structure for providing a counterpart for the one or more resilient element **130.**

In one example, the structure may be a second cell stack **11B** of the battery unit **1.** The cell swelling compensator **100** may thus be adapted to be arranged between the first cell stack **11A** and the second cell stack **11B** for exerting a force onto the first cell stack **11A** and the second cell stack **11B** for compensating for cell swelling in the first cell stack **11A** and the second cell stack **11B.** The one or more resilient element **130** may be adapted to exert a force pressing against the first and second cell stack **11A-B** for pressing the first and second cell stack **11A-B** away from each other. Thereby, a single cell swelling compensator **100** may enable to compensate for cell swelling in both the first and second cell stack **11A-B.**

In the depicted example, the structure is the housing **2** of the battery unit **1.** The cell swelling compensator **100** may thus be adapted to be arranged between the housing **2** and the first cell stack **11A.** The one or more resilient element **130** of the cell swelling compensator **100** may be adapted to press against a portion of the housing **2** and press the first cell stack **11A** away from said portion.

In the depicted example, the first cell stack **11A** may be an outermost cell stack of the plurality of cell stacks. The cell swelling compensator **11A** may be arranged between an outer surface of the first cell stack **11A** and an opposite inner surface of the housing **2.** The outer surface of the first cell stack **11A** may face said opposite inner surface of the housing **2.**

To enable an improved pressure distribution, the cell swelling compensator **100** may extend across at least a majority of the width of the first cell stack **11A.** The width may extend orthogonally to the central axis **C.**

Further referencing the example of **FIG. 2A****,** the battery unit **1** may comprise one or more spacers **3.** A spacer **3** may be arranged between each cell stack **11.** The spacer **3** may be in a resilient material. It may however be envisioned that any spacer **3** may be replaced with a cell swelling compensator **100** as described herein. Alternatively, cell swelling compensators **100** may be provided between the cell stacks **11** and a spacer **3** may be provided between the outermost cell stacks and the housing **2.**

Further referencing **FIG. 2A****,** the cell swelling compensator **100** may comprise one or more plate forming an end portion of the cell swelling compensator **100.** Such a plate allows for a more even pressure distribution from the cell swelling compensator **100.**

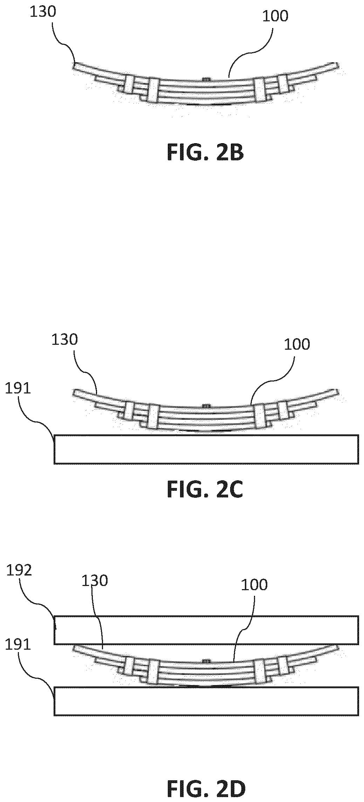

The cell swelling compensator **100** may thus comprise a first plate **191.** The first plate **191** may form an end portion of the cell swelling compensator **100.** The first plate **191** may extend orthogonally to the swelling direction **s.** Depending on the implementation the cell swelling compensator **100** comprise one, two or no plates forming end portions. This will be further explained with reference to **FIG. 2B-D.** The first plate **191** may have an outer surface facing the structure of the first cell stack **11A.** The surface area of said outer surface may correspond to at least 50% of the surface area of a cell stack surface area of the first cell stack **11A** extending orthogonally to the center axis **C.** Advantageously, the surface area of the outer surface of the first plate **191** may correspond to at least 75% of the surface of the cell stack surface area.

It may be envisioned that the cell swelling compensator **100** does not comprise any plates forming end portions. Such an example is depicted in **FIG. 2B****,** such a cell swelling compensator **100** may be easier and cheaper to produce. In such an example, the cell swelling compensator **100** may be adapted to engage the structure and the first cell stack **11A** by the one or more resilient elements **130** being in contact with the structure and the first cell stack **11A.** Alternatively, the first cell stack **11A** and/or the structure may be provided with a plate. Hence, a plate may be mounted to the structure and/or the first cell stack **11A,** for example by means of fastening elements or an adhesive such as glue. The plate may thus not form a part of the cell swelling compensator **100** but may form a part of the structure and/or the first cell stack **11A.** In such an example, the one or more resilient elements **130** may be adapted to engage the plate by means of being in contact with said plate and/or by being adapted to be mounted to said plate

**FIG. 2C** depicts a cell swelling compensator **100** according to another example. The cell swelling compensator **100** comprises a first plate **191** forming an end portion of the cell swelling compensator **100** and adapted to face the structure or the first cell stack **11A.** In the depicted example, the cell swelling compensator **100** solely comprises a single end plate. Such a design may be advantageous if the cell swelling compensator **100** is to be arranged between the first cell stack **11A** and a structure in the form of the housing **2** as the housing **2** is rigid and less reliant on even pressure distribution. Accordingly, the first plate **191** may be adapted to face the first cell stack **11A.** In one example, the first plate **191** may be adapted to be in contact with the first cell stack **11A.**

**FIG. 2D** depicts a cell swelling compensator **100** according to another example. The cell swelling compensator **100** comprises a first plate **191** forming an end portion of the cell swelling compensator **100** and adapted to face the first cell stack **11A.** The cell swelling compensator **100** may further comprise a second plate **192** forming a second end portion of the cell swelling compensator **100** opposite to the first. The second plate **192** may be adapted to face the structure. The second plate **192** may, similar to the first plate **191,** extend orthogonally to the swelling direction s. Such a design may be advantageous if the cell swelling compensator **100** is to be arranged between the first cell stack **11A** and a structure in the form of the second cell stack **11B** as it allows for even pressure distribution on the second cell stack **11B.** Accordingly, the second plate **192** may be adapted to face the second cell stack **11B** of the battery unit **1.**

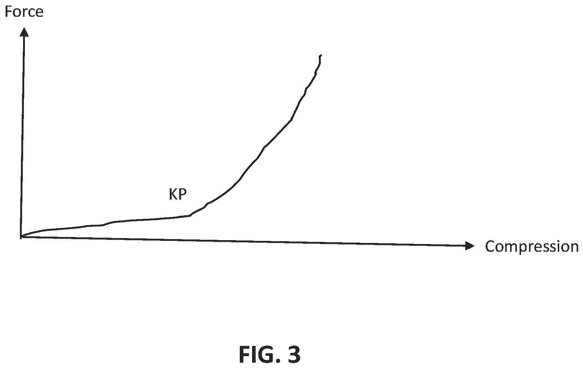

Turning to **FIG. 3****,** the behavior of an exemplary cell swelling compensator **100** is depicted. In the depicted example, the cell swelling compensator **100** is adapted to provide a variable degree of compensation depending on the swelling. Accordingly, the one or more resilient elements **130** may be adapted to provide a variable stiffness depending on the displacement, e.g. compression, of the one or more resilient elements **130.** It may however also be envisioned that the one or more resilient elements **130** may be adapted to provide a constant stiffness depending on the displacement, e.g. the compression, of the one or more resilient elements **130.**

A variable stiffness may be particularly advantageous due to enabling the cell swelling compensator to provide compensation suitable for different degrees of cell swelling the first cell stack **11A.**

As depicted, the one or more resilient elements **130** may be adapted to provide an increased stiffness at larger displacements, e.g. upon being compressed to a higher degree. In the depicted example, the one or more resilient elements **130** may be adapted to provide an increased stiffness upon the compression of the one or more resilient elements **130** exceeding a compression threshold. Thus, upon the one or more resilient elements **130** being compressed up to a certain degree, the stiffness and resulting force processing against the first cell stack **11A** is increased. Thereby, the cell swelling compensator **100** will provide suitable support even at smaller degrees of swelling and at shrinking of the first cell stack **11A** and provide large resistance in cases where the first cell stack **11A** swells to a higher degree.

In **FIG. 3****,** the compression threshold is depicted as a knee point **KP.** At compression lower than the knee point **KP,** the resulting force is relatively low while at compression higher than the knee point **KP,** the resulting force is substantially higher.

As will be described in further detail later on, the compression threshold may be achieved in a multitude of ways, by the design of the resilient elements, by utilizing a plurality of resilient elements etc. As will also be described later on this may be achieved by different resilient elements being engaged at different levels of compression, thus creating one or more knee point as referenced above.

As will be further described later on, the cell swelling compensator **100** may comprise a plurality of resilient elements **130.** The plurality of resilient elements **130** may form a resilient structure. The graph of **FIG. 3** may thus show the behavior of such a resilient structure when compressed.

In one example, the plurality of resilient elements **130** may be arranged such that said plurality of resilient elements **130** may be engaged at different levels of compression of the resilient structure formed by the plurality of resilient elements **130** to provide the increased stiffness at the compression threshold. Thus, upon the resilient structure being compressed, one or more resilient element of the plurality of resilient elements may be engaged beyond compression of the resilient structure to a certain level. Thereby, the compression threshold may be achieved. Examples of such resilient structures will be described in further detail later on.

In one example, the compression threshold may be achieved by the resilient elements **130** deforming at different relative distances between the first cell stack **11A** and the structure, e.g. along the swelling direction **s.** In one example, the one or more resilient elements **130** may thus comprise a plurality of resilient elements **130.** The resilient elements **130** may be arranged such that said resilient elements **130** may start to deform at different relative distances between the first cell stack **11A** and the structure to provide the variable stiffness.

Accordingly, the resilient elements **130** forming the resilient structure may start to deform at different relative distances between the first cell stack **11A** and the structure causing the variable stiffness, e.g. the increased stiffness at smaller relative distances between the first the cell stack **11A** and the structure.

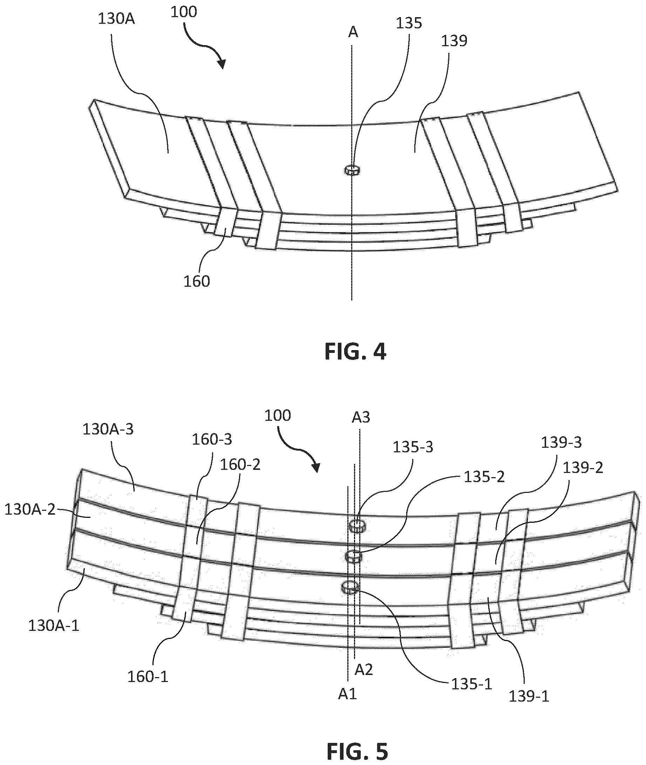

**FIG. 4-12** depicts examples of cell swelling compensators **100.** Notably, the cell swelling compensators **100** may or may not be adapted to provide a variable stiffness in accordance with the examples above.

In some examples, the one or more resilient elements **130** may comprise a plurality of releasably interconnected resilient elements **130.** This allows for a modular cell swelling compensator **100** which may be adapted for a particular implementation and application. The resilient structure may thus be formed by a plurality of releasably interconnected resilient elements **130.** In some examples, the plurality of releasably interconnected resilient elements **130** may be configured to provide the variable stiffness discussed with reference to **FIG. 3****.**

Having more than one resilient element **130** in accordance with the above may allow for proper compression of the first cell stack **11A** during its lifetime. In such an example, one or more resilient element **130** may function as a main compensator, designed to compensate swelling and providing support. In many cases, the first cell stack **11A** may be compressed during assembly of the battery unit. Commonly, the assembly is performed at 30% to 50% state of charge of a cell stack, e.g. the first cell stack **11A.** However, during discharge, especially at the beginning of life, the first cell stack **11A** can shrink so much that the one or more resilient element **130** functioning as a main compensator is not pressing against the first cell stack **11A** anymore. Having one or more additional resilient element **130** functioning as an additional compensator may ensure that the first cell stack **11A** is always compressed and stable inside the battery unit **1.**

**FIG. 4-11** depicts examples of cell swelling compensators **100** comprising resilient elements **130** in the form of leaf springs **130A** stacked on top of each other. In some examples, the plurality of leaf springs **130A** may provide the variable stiffness by means of the design and arrangement of the leaf springs **130A.**

In some examples, the plurality of leaf springs **130A** may comprise leaf springs with different curvatures and/or dimensions for providing a desired stiffness in response to the displacement of said leaf springs **130A.** Accordingly, the leaf springs **130A** may be adapted to provide a desired stiffness curve (e.g. in relation to their deformation, e.g. compression).

In some examples, the plurality of leaf springs **130A** may comprise leaf springs with different curvatures and/or dimensions for providing a variable stiffness depending on the displacement of the leaf springs **130A.**

**FIG. 4** depicts an example of a cell swelling compensator **100** from a perspective view.

The one or more resilient elements **130** may comprise a one or more leaf springs **130A.** In the depicted example, the one or more resilient elements **130** comprises a plurality of leaf springs **130A.** A leaf spring **130A** may, as the skilled person recognizes, be provided as a curved element in a resilient material such as metal, for example steel.

In one example, the leaf springs **130A** may each comprise a curved portion **139.** The curved portion **139** may be adapted to face the structure and the first cell stack **11A.** The curved portion may be curved relative to the swelling direction **s.** The curved portion may be convex or concave relative to the swelling direction **s.** The curved portion may be concave or convex relative to a distal direction extending along the relative distance from the first cell stack **11A** to the structure.

The plurality of leaf springs **130A** may be stacked on top of each other along a stacking axis **A.** In one example, the stacking axis **A** may extend across the distance between the first cell stack **11A** and the structure. The cell swelling compensator **100** may thus be adapted to control the distance between the first cell stack **11A** and the structure along the stacking axis **A.** The one or more resilient elements **130** may be adapted to deform along the stacking axis **A.** In one example, the stacking axis **A** may extend parallel to the center axis **C** of the battery unit **1.** The stacking axis **A** may be substantially parallel to the swelling direction **s.**

The curved portion **139** of the leaf springs **130A** may extend substantially orthogonally to the stacking axis **A.** The leaf springs **130A** may thus be convex or concave relative to the stacking axis **A,** e.g. a direction extending along the stacking axis **A.**

The leaf springs **130A** may be provided as strips, e.g. thin strips.

Using multiple leaf springs **130A,** e.g. leaf springs forming thin strips, stacked on top of each other may distribute the load more evenly along the length of each leaf spring **130A.** This helps to prevent stress concentrations at specific points, which can lead to premature failure of the spring. It also allows for better distribution across the entire length of the spring

In addition, by using multiple leaf springs **130A,** the stiffness and load-carrying capacity of the cell swelling compensator **100** can be easily adjusted by adding or removing individual leaf springs **130A.** This level of customization allows tailoring of the cell swelling compensator to specific requirements.

Using multiple leaf springs **130A,** e.g. thinner leaf springs **130A,** can be more cost-effective than using a single thick strip of the same material. Thinner leaf springs **130A** may be easier to manufacture and work with, and they can be stacked and assembled more efficiently.

In one example, the leaf springs **130A** may be the thickest at its center. At its center the flexural Stress is the highest. The stress is the lowest near the ends of the leaf springs **130A** where a thinner thickness may suffice. Thereby the cost, weight and size of the leaf springs **130A** may be improved.

In one example, the plurality of leaf springs **130A** may be clamped together by means of one or more clamping members **160.** The cell swelling compensator **100** may comprise the one or more clamping members **160.** The one or more clamping members **160** may be mounted to, preferably releasably mounted to, the leaf springs **130A** to clamp the leaf springs **130A** together. In the depicted example, the one or more clamping members **160** are provided in the form of clamps enveloping the leaf springs **130A.** It may however be envisioned that other types of suitable clamping members may be utilized. In the depicted example, a plurality of parallel extending clamping members **160** are mounted to the leaf springs **130A** to clamp said leaf springs **130A** together.

As aforementioned, the one or more clamping members **160** may be releasably mounted to the leaf springs **130A.** Thus, the one or more clamping members **160** may be released from the leaf springs **130A,** for example to replace, add or remove leaf springs **130A** relative to the plurality of leaf springs **130A.**

To further prevent relative movement between the leaf springs **130A,** the cell swelling compensator **100** may further comprise a mounting member **135,** e.g. one or more mounting member **135.** The mounting member **135** may extend parallel to the stacking axis **A.** The mounting member **135** may be adapted to provide a stop for movement of the leaf springs **130A** stacked on top of each other along the stacking axis **A** in a direction extending orthogonally to the stacking axis **A.** The mounting member **135** may extend through an aperture provided in each of the leaf springs **130A** stacked on top of each other. The mounting member **135** may be adapted to provide a stop for movement of the leaf springs **130A** to prevent relative movement orthogonal to the swelling direction **s.** In some examples, the mounting member **135** may be adapted to prevent movement of the leaf springs **130A** also in a direction extending parallel to the stacking axis **A** and/or the swelling direction **s.** In some examples, the mounting member **135** may be provided as a guiding element allowing for relative movement between the leaf springs **130A** along the stacking axis **A** but not orthogonally to said stacking axis **A.**

In the depicted example, the concave surface of the leaf springs **130A** are arranged to face the structure and the opposite convex surface of the leaf springs **130A** may be arranged to face the first cell stack **11A.** Thus, the concave surface of the curved portion **139** may be adapted to face the structure and the opposite convex surface of the curved portion **139** may be adapted to face the first cell stack **11A.**

In some examples, the cell swelling compensator **100,** e.g. the leaf springs **130A** stacked on top of each other, may provide a variable stiffness. The leaf springs **130** may be adapted to provide an increased stiffness upon the leaf springs **130A** upon the compression of the leaf springs **130A** exceeding a compression threshold.

In some examples, this is achieved by the leaf springs **130A** having different dimensions. The leaf springs **130A** may have a different length. The length of the leaf springs 130A may extend orthogonally to the stacking axis **A.** Accordingly, the leaf springs **130A** may comprise a first leaf spring and a second leaf spring, the first leaf spring having a different length compared to the second leaf spring. By selecting leaf springs of different sizes (e.g. lengths), curvatures etc., the properties of the cell swelling compensator **100** may be adapted in a simple manner to accommodate for different implementations.

Turning to **FIG. 5****,** a cell swelling compensator **100** according to another example is shown. In the depicted example, the cell swelling compensator **100** may comprise plurality of groups of leaf springs **130A** stacked on top of each other along a stacking axis. The cell swelling compensator **100** may comprise at least two groups of such leaf springs **130A.**

Accordingly, the one or more resilient elements **130** may comprise a first plurality of leaf springs **130A-1** stacked on top of each other along a first stacking axis **A1**. The one or more resilient elements **130** may comprise a second plurality of leaf springs **130A-2** stacked on top of each other along a second stacking axis **A2.**

The first stacking axis **A1** and the second stacking axis **A2** may extend parallel to each other. The first stacking axis **A1** and the second stacking axis **A2** may each extend parallel to the center axis **C** of the battery unit **1.**

The first plurality of leaf springs **130A-1** and the second plurality of leaf springs **130A-2** may extend parallel to each other between the structure and the first cell stack **11A.** The first plurality of leaf springs **130A-1** and the second plurality of leaf springs **130A-2** may extend adjacent to each other.

In the depicted example, the first plurality of leaf springs **130A-1** and the second plurality of leaf springs **130A-2** may be arranged next to each other such that the longitudinal sides of the first plurality of leaf springs **130A-1** and the longitudinal sides of the second plurality of leaf springs **130A-2** may be arranged side by side.

In the depicted example, the one or more resilient element **130** further comprises a third plurality of leaf springs **130A-3** stacked on top of each along a third stacking axis **A3.**

The third stacking axis **A3** may extend parallel to the first stacking axis **A1** and the second stacking axis **A2.** The third stacking axis **A3** may extend parallel to the center axis **C** of the battery unit **1.** The third plurality of leaf springs **130A-3** may extend parallel to the first plurality of leaf springs **130A-1** and the second plurality of leaf springs **130A-2** between the structure and the first cell stack **11A.** The third plurality of leaf springs **130A-3** may be arranged adjacent to the second plurality of leaf springs **130A-2.**

In the depicted example, the third plurality of leaf springs **130A-3** and the second plurality of leaf springs **130A-2** may be arranged next to each other such that the longitudinal sides of the third plurality of leaf springs **130A-3** and the longitudinal sides of the second plurality of leaf springs **130A-2** may be arranged side by side.

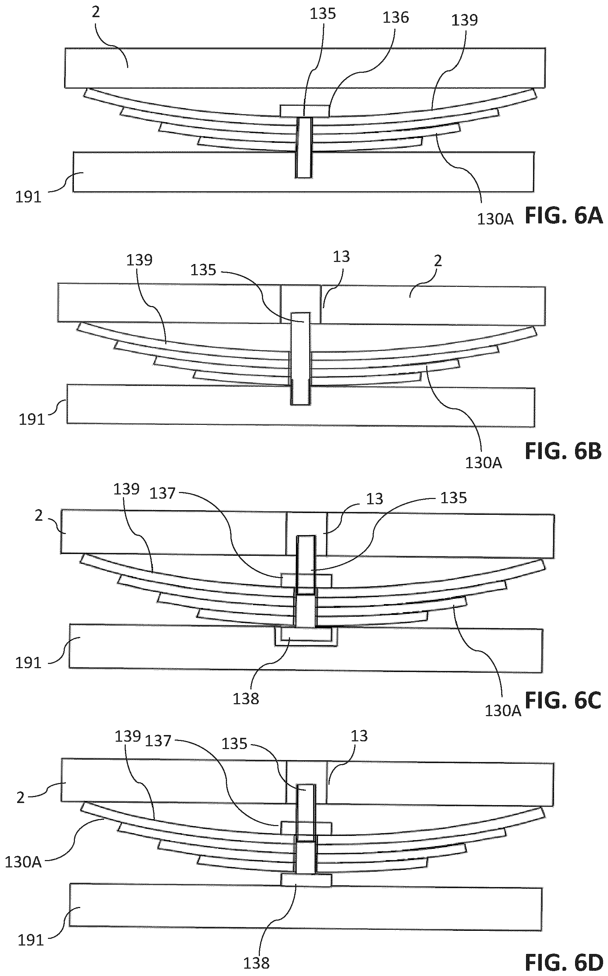

**FIG. 6A-D** depicts the cell swelling compensator **100** according to different examples. In the figures, different examples of the mounting member **135** and implementations of the mounting member **135** are shown. It may be envisioned that the examples of mounting members **135** and implementations of the mounting member **135** may be utilized together with any of the relevant examples of the cell swelling compensator **100** described herein.

The mounting member **135** may extend through the leaf springs **130A.** The mounting member **135** may extend through the curved portions **139** of the leaf springs **130A.** The mounting member **135** may extend through a central part of each leaf spring **130A** arranged along the stacking axis **A.** The mounting member **135** may be arranged along and/or coinciding with the stacking axis **A.**

Referencing **FIG. 6A****,** the mounting member **135** may comprise a head portion 136. In the depicted example, the mounting member **135** may be provided as a fastening member, e.g. a threaded fastening member such as a bolt or screw. The head portion **136** may press on the leaf springs **130A** arranged on top of each other along the stacking axis **A.** The head portion **136** may thus be adapted to clamp said leaf springs **130A** together along the stacking axis **A.**

In some examples, the mounting member **135** may be adapted to fix the leaf springs **130A** relative to the structure or the first cell stack **11A** or a first or second plate **191, 192.** This may be achieved by the mounting member **135** being adapted to engage a hole, preferably a threaded hole, provided in the first cell stack **11A,** the structure or a first or second plate **191, 192** of the cell swelling compensator **100.** In the depicted example, the mounting member **135** is adapted to engage the first plate **191** to fixate the leaf springs **130A** relative to the first plate **191.**

Referencing **FIG. 6B****,** the mounting member **135** may be provided as a pin. The pin may extend parallel to the stacking axis **A** and may preferably coincide with the stacking axis **A.** The pin may be fixed relative to the first plate **191** or the second plate **192.** In the depicted example, the cell swelling compensator **100** solely comprises a first plate **191.** The pin may be fixed to the first plate **191.** In the depicted example, the pin, e.g. a first end portion of the pin, may be fixedly mounted to a hole in the first plate **191.** The pin, e.g. a second end portion of the pin opposite to the first, may be adapted to slidingly engage a corresponding hole **13** in the first cell stack **11A** or the structure. In the depicted example, the corresponding hole **13** is provided in the structure. In the depicted example, the corresponding hole **13** is provided in the housing **2.** Upon compression of the leaf springs **130A,** the pin will move along the swelling direction **s** and/or the stacking axis **A** inside the corresponding hole **13** thereby guiding said movement and preventing relative movement of the leaf springs **130A** in a direction extending orthogonally to the stacking axis **A** and/or the swelling direction **s.**

Referencing **FIG. 6C****,** the cell swelling compensator **100** may comprise a nut **137.** The nut **137** may be adapted to be in adjustable engagement with the pin. The nut **137** may be adjustable relative to the pin to press on the leaf springs **130A** arranged on top of each other along the stacking axis **A.** The nut **137** may thus be adapted to clamp said leaf springs **130A** together along the stacking axis **A.**

In the depicted example, the pin may be provided with a bolt head **138.** The bolt head **138** may be fixed relative to the first plate **191** or the second plate **192.** In the depicted example, the cell swelling compensator **100** solely comprises a first plate **191.** The bolt head **138** may be fixed to the first plate **191.** In one example, the bolt head **138** may be arranged to engage the first plate **191** by means of being in contact with the first plate **191.** According to such an example, the bolt head **138** may not be fixed to said first plate **191** and may only press against said first plate **191.**

In the depicted example, the bolt head **138** may be provided in a recessed portion of the first plate **191** or the second plate **192.** Thereby, a more space efficient cell swelling compensator **100** may be achieved. The bolt head **138** may for example be bolted, glued or welded in the recessed portion. In one example, the bolt head **138** may be arranged in the recessed portion without any fastening means.

Referencing **FIG. 6D****,** the bolt head **138** may instead be mounted at an outer surface of the first plate **191** or the second plate **192** facing the leaf springs **130A.** In one example, the bolt head **138** may be welded, glued or bolted onto said outer surface. In the depicted example, the bolt head **138** is mounted to an outer surface of the first plate **191.** It may however be envisioned that the bolt head **138** is arranged to only press against said first plate **191,** e.g. the bolt head **138** may not be connected to the first plate **191.**

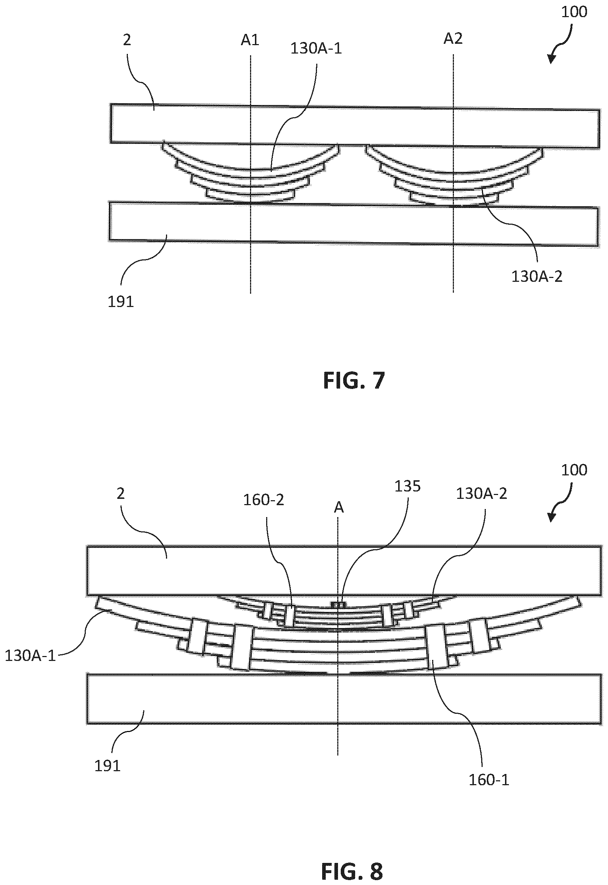

As will be described with reference to **FIG. 7-10****,** the cell swelling compensator 100 may comprise groups of leaf springs **130A,** e.g. a multitude of pluralities of leaf springs stacked on top of each other. The resilient structure of the cell swelling compensator **100** may thus be formed by said groups.

**FIG. 7** depicts a cell swelling compensator **100** according to an example. According to the depicted example, the cell swelling compensator **100** may comprise at least two pluralities of leaf springs stacked on top of each other and extending in parallel to each other.

Accordingly, the one or more resilient elements **130** may comprise a first plurality of leaf springs **130A-1** stacked on top of each other along a first stacking axis **A1**. The one or more resilient elements **130** may comprise a second plurality of leaf springs **130A-2** stacked on top of each other along a second stacking axis **A2.**

The first stacking axis **A1** and the second stacking axis **A2** may extend parallel to each other. The first stacking axis **A1** and the second stacking axis **A2** may each extend parallel to the center axis **C** of the battery unit **1.**

The first plurality of leaf springs **130A-1** and the second plurality of leaf springs **130A-2** may extend parallel to each other between the structure and the first cell stack **11A.** The first plurality of leaf springs **130A-1** and the second plurality of leaf springs **130A-2** may extend adjacent to each other.

In the depicted example, the first plurality of leaf springs **130A-1** and the second plurality of leaf springs **130A-2** may be at a distance from each other. The distance may extend substantially orthogonal to the stacking axis **A** and/or the swelling direction **s.**

In the depicted example, the first plurality of leaf springs **130A-1** and the second plurality of leaf springs **130A-2** may be arranged next to each other such that the transversal sides of the first plurality of leaf springs **130A-1** and the transversal sides of the second plurality of leaf springs **130A-2** faces each other.

In the depicted example, the first and second plurality of leaf springs **130A-1, 130A-2** are mounted to the first plate **191,** preferably by means of the mounting member **135,** and adapted to engage the structure here in the form of the housing **2** by means of being brought into contact with said structure. In the depicted example, the convex surface of the curved portion **139** of the leaf springs **130A** of the first and second plurality of leaf springs **130A-1, 130A-2** faces the cell stack **11A** and the first plate **191** and the concave surface of the curved portion **139** of the first and second plurality of leaf springs **130A-1, 130A-2** faces the structure.

**FIG. 8** depicts a cell swelling compensator **100** according to another example. The cell swelling compensator **100** may comprise a first plurality of leaf springs **130A-1** and a second plurality of leaf springs **130A-2.**

Accordingly, the one or more resilient elements **130** may comprise a first plurality of leaf springs **130A-1** stacked on top of each other along a first stacking axis **A1**. The one or more resilient elements **130** may comprise a second plurality of leaf springs **130A-2** stacked on top of each other along a second stacking axis **A2.**

In the depicted example, the second stacking axis **A1** may coincide with the first stacking axis **A1**. In **FIG. 8****,** this is symbolized by the first plurality of leaf springs **130A-1** and the second plurality of leaf springs **130A-2** being stacked on top of each other along a common stacking axis **A.**

Thus, one of the first plurality of leaf springs **130A-1** and the second plurality of leaf springs **130A-2** may be arranged closer to the first cell stack **11A.** Thereby, upon the first cell stack **11A** swelling, the plurality of leaf springs **130A-1, 130A-2** arranged closer to the first cell stack **11A** will deform first before the other plurality of leaf springs **130A-1, 130A-2** thereby making the resilient elements **130,** herein formed by the leaf springs **130A,** to provide a variable stiffness depending on the displacement of the resilient elements **130.** Further, the leaf springs **130A** may provide an increased stiffness at higher degrees of compression.

The first plurality of leaf springs **130A-1** may be larger than the second plurality of leaf springs **130A-2.**

In the depicted example, the first plurality of leaf springs **130A-1** may be arranged closer to the first cell stack **11A** than the second plurality of leaf springs **130A-2.** Upon the first cell stack **11A** swelling in the stacking direction **s,** the first plurality of leaf springs **130A-1** will start to deform, e.g. be compressed. Upon the deformation, e.g. compression, reaching a certain degree, herein referenced as the compression threshold, the second plurality of leaf springs **130A-2** will start to deform due to the first plurality of leaf springs **130A-1** engaging said second plurality of leaf springs **130A-2.** The stiffness provided by all of the resilient elements **130,** e.g. the leaf springs **130A,** thus increases.

The first plurality of leaf springs **130A-1** may be mounted to the first plate **191.** This may enable proper pressure distribution in a simple and non-complex manner. It may however be envisioned that the first plurality of leaf springs **130A-1** may be in direct engagement with the first cell stack **11A** or a plate directly mounted to the first cell stack **11A.** The second plurality of leaf springs **130A-2** may be in engagement with the structure, e.g. the housing **2** or the second cell stack **11B.** In the depicted example, the second plurality of leaf springs **130A-2** is in engagement with the housing **2.** It may however be envisioned that the second plurality of leaf springs **130A-2** may be mounted to the second plate **192.**

In the depicted example, the leaf springs of the first plurality of leaf springs **130A-1** and the second plurality of leaf springs **130A-2** may be concave relative to the swelling direction **s.** It may however be envisioned that either of the first and second plurality of leaf springs **130A1-2** may be either concave or convex relative to the swelling direction s.

In the depicted example, the first and second plurality of leaf springs **130A-1, 130A-2** are mounted to the first plate **191,** preferably by means of the mounting member **135,** and adapted to engage the structure here in the form of the housing **2** by means of being brought into contact with said structure. In the depicted example, the convex surface of the curved portion **139** of the leaf springs **130A** of the first and second plurality of leaf springs **130A-1, 130A-2** faces the cell stack **11A** and the first plate **191** and the concave surface of the curved portion **139** of the first and second plurality of leaf springs **130A-1, 130A-2** faces the structure.

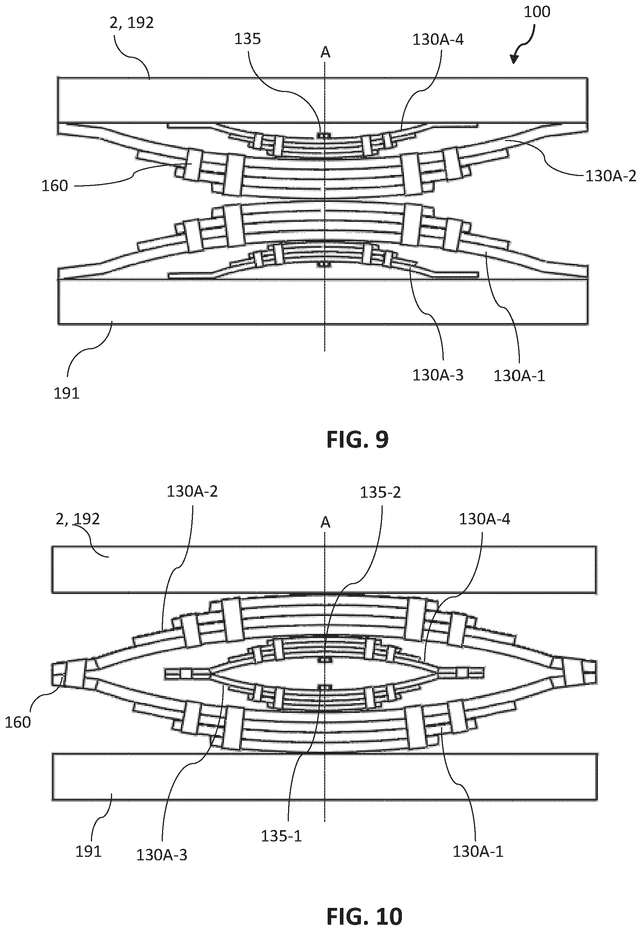

**FIG. 9-10** shows additional examples of the cell swelling compensator **100.** Similar to the example shown in **FIG. 8****,** the first and second plurality of leaf springs **130A-1, 130A-2** are stacked on top of each other along a first stacking axis **A1** and a second stacking axis **A2,** the second stacking axis **A2** coinciding with the first stacking axis **A1**. Contrary to the example shown in **FIG. 8****,** some of the groups of leaf springs **130A-1, 130A-2** may be arranged in opposite directions.

The second plurality of leaf springs **130A-2** may thus be arranged in an opposite direction relative to the first plurality of leaf springs **130A-1.**

The examples depicted in **FIG. 9-10** comprises a resilient structure formed by a first plurality of leaf springs **130A-1,** a second plurality of leaf springs **130A-2,** a third plurality of leaf springs **130A-3** and a fourth plurality of leaf springs **130A-4.**

Similar to first and second plurality of leaf springs **130A-1, 130A-2,** the third plurality of leaf springs **130A-3** may be stacked on top of each along a third stacking axis and the fourth plurality of leaf springs may be stacked on top of each along a fourth stacking axis. The first, second, third and fourth stacking axis may coincide. In **FIG. 9-10** this is represented by the common stacking axis **A.**

Optionally, the leaf springs of each of the pluralities of leaf springs **130A** may be fixed to the first or second plate. However, it may also be envisioned that the leaf springs **130A** are fitted between the first and second plate and kept in position by means of the contact pressure. Notably, it may be preferable to fix the leaf springs **130A** in position as it may ensure proper positioning of said leaf springs **130A.**

Referencing **FIG. 9****,** the first plurality of leaf springs **130A-1** and the third plurality of leaf springs **130A-1** may be adapted to be arranged at the first plate **191** facing the cell stack **11A** or the cell stack **11A.** The concave surface of the curved portion **139** of the leaf springs of the first and third plurality of leaf springs **130A-1, 130A-3** may face said cell stack **11A** or first plate **191.** The leaf springs of the first plurality of leaf springs **130A-1** may be larger than the leaf springs of the third plurality of springs **130A-3.**

Upon the first cell stack **11A** swelling in the stacking direction s, the first plurality of leaf springs **130A-1** will start to deform, e.g. be compressed. Upon the deformation, e.g. compression, reaching a certain degree, herein referenced as the compression threshold, the third plurality of leaf springs **130A-3** will start to deform due to the first plurality of leaf springs **130A-1** engaging said third plurality of leaf springs **130A-3.** The stiffness provided by all of the resilient elements **130,** e.g. the leaf springs **130A,** thus increases.

The second plurality of leaf springs **130A-2** and the fourth plurality of leaf springs **130A-4** may be adapted to be arranged at the second plate **192** facing the structure (herein provided as the housing **2**) or the structure (herein provided as the housing **2**). The concave surface of the curved portion **139** of the leaf springs of the second and fourth plurality of leaf springs **130A-2, 130A-4** may face said second plate **192** or structure. The leaf springs of the second plurality of leaf springs **130A-2** may be larger than the leaf springs of the fourth plurality of springs **130A-4.**

The first plurality of leaf springs **130A-1** may be connected to the second plurality of leaf springs **130A-2,** for example via the mounting member **135.** Upon the first cell stack **11A** swelling in the stacking direction **s,** the second plurality of leaf springs **130A-2** will start to deform, e.g. be compressed due to being connected to the first plurality of leaf springs **130A-1.** Upon the deformation, e.g. compression, reaching a certain degree, herein referenced as the compression threshold, the fourth plurality of leaf springs **130A-4** will start to deform due to the second plurality of leaf springs **130A-2** engaging said fourth plurality of leaf springs **130A-4.** The stiffness provided by all of the resilient elements **130,** e.g. the leaf springs **130A,** thus increases.

Referencing **FIG. 10****,** the first plurality of leaf springs **130A-1** may be adapted to be arranged at the first plate **191** facing the cell stack **11A** or the cell stack **11A.** The first plurality of leaf springs **130A-1** may be arranged closer to said first cell stack **11A** than the third plurality of leaf springs **130A-3** relative to the stacking axis **A** and/or the swelling direction **s** of the first cell stack **11A.** The convex surface of the curved portion **139** of the leaf springs of the first and third plurality of leaf springs **130A-1, 130A-3** may face said cell stack **11A** or first plate **191.** The leaf springs of the first plurality of leaf springs **130A-1** may be larger than the leaf springs of the third plurality of leaf springs **130A-3.**

The first and third plurality of leaf springs **130A-1, 130A-3** may be preferably fixed to the first plate **191.** The first and third plurality of leaf springs **130A-1, 130A-3** may be fixed to the first plate **191** by means of the mounting member **135,** e.g. a first mounting member **135-1.**

Upon the first cell stack **11A** swelling in the stacking direction **s,** the first plurality of leaf springs **130A-1** will start to deform, e.g. be compressed. Upon the deformation, e.g. compression, reaching a certain degree, herein referenced as the compression threshold, the third plurality of leaf springs **130A-3** will start to deform due to the first plurality of leaf springs **130A-1** engaging said third plurality of leaf springs **130A-3.** The stiffness provided by all of the resilient elements **130,** e.g. the leaf springs **130A,** thus increases.

The second plurality of leaf springs **130A-2** may be adapted to be arranged at the second plate **192** facing the structure (herein provided as the housing **2**) or the structure (herein provided as the housing **2**). The second plurality of leaf springs **130A-2** may be arranged closer to said structure and/or second plate **192** than the fourth plurality of leaf springs **130A-4** relative to the stacking axis **A** and/or the swelling direction **s** of the first cell stack **11A.** The convex surface of the curved portion **139** of the leaf springs of the second and fourth plurality of leaf springs **130A-2, 130A-4** may face said structure and/or second plate **192.** The leaf springs of the second plurality of leaf springs **130A-2** may be larger than the leaf springs of the fourth plurality of leaf springs **130A-4.**

The second and fourth plurality of leaf springs **130A-2, 130A-4** may be preferably be fixed to the second plate **192.** The second and fourth plurality of leaf springs **130A-2, 130A-4** may be fixed to the second plate **192** by means of the mounting member **135,** e.g. a second mounting member **135-2.**

The second plurality of leaf springs **130A-2** may be connected to the first plurality of leaf springs **130A-1.** The second plurality of leaf springs **130A-2** may be connected to said first plurality of leaf springs **130A-1** by means of at least one of the one or more clamping members **160** clamping at least one of the leaf springs of the first plurality of leaf springs **130A-1** together with at least one of the leaf springs of the second plurality of leaf springs **130A-2** together.

Upon the first cell stack **11A** swelling in the stacking direction **s,** the second plurality of leaf springs **130A-2** will start to deform, e.g. be compressed, due to be being connected to the first plurality of leaf springs **130A-1.** Upon the deformation, e.g. compression, reaching a certain degree, herein referenced as the compression threshold, the fourth plurality of leaf springs **130A-4** will start to deform due to the second plurality of leaf springs **130A-2** engaging said fourth plurality of leaf springs **130A-4.** The stiffness provided by all of the resilient elements **130,** e.g. the leaf springs **130A,** thus increases.

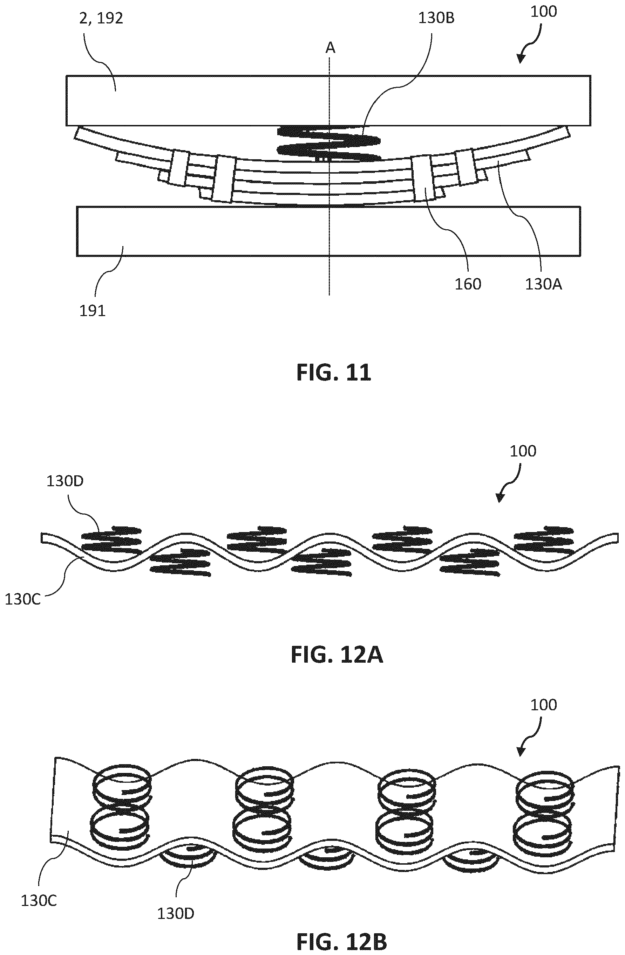

Referencing **FIG. 11-12****,** the cell swelling compensator **100** may comprise resilient elements **130** also in the form of an elastic bushing or a coil spring **130B.** The cell swelling compensator **100** may thus comprise one or more elastic bushing or coil spring 130B.

The elastic bushing or coil spring **130B** may be arranged on an outer surface of the leaf springs **130A,** e.g. the leaf springs **130A** stacked on top of each other. The outer surface may face the structure or the first cell stack **11A.** The outer surface may be in the form of a concave surface of the curved portion **139** of an outermost leaf spring of the plurality of leaf springs **130A.**

In the depicted example, the elastic bushing or coil spring **130B** is arranged along the stacking axis **A.** In the depicted example, the coil spring or elastic bushing **130B** may be arranged at the structure and/or the second plate **192** facing said structure. In the depicted example, the structure may be provided as the housing **2.** In the depicted example, the coil spring or elastic bushing **130B** is fixed to said second plate **192** or structure. The leaf springs **130A** may be fixed to the first plate **191** facing the first cell stack **11A.** Although not depicted, the leaf springs **130A** may be fixed to the first plate **191** by means of a mounting member **135** as previously described.

Upon the first cell stack **11A** swelling in the swelling direction **s,** the leaf springs **130A** will start to deform, e.g. compress. Upon the deformation, e.g. compression, reaching a certain level, the leaf springs **130A** will engage the elastic bushing or coil spring **130B.** Thereby, the elastic bushing or coil spring **130B** is activated, e.g. starts to compress. Thus, the stiffness of the resilient structure formed by leaf springs **130A** and the elastic bushing or coil spring **130B** increases, thereby achieving the varying stiffness.

Although depicted in one orientation, e.g. configuration, it may very well be envisioned that the cell swelling compensator **100** is oriented, e.g. configured, in the opposite way. Thus, the elastic bushing or coil spring **130B** may be arranged closer to the first cell stack **11A** relative the swelling direction s than the leaf springs **130A.** The elastic bushing or coil spring **130B** may thus deform, e.g. compress, before activation of the leaf spring **130A** upon swelling of the first cell stack **11A** in the stacking direction **s.**

**FIG. 12A-B,** depicts an example wherein the one or more resilient element comprises a leaf spring provided as a wave spring **130C.** The wave spring **130C** may extend substantially orthogonally to the swelling direction **s** of the first cell stack **11A** and/or the relative distance between the first cell stack **11A** and the structure.

The wave spring **130C** may comprise a first and second wave-shaped surface with ridges and valleys. The second wave-shaped surface may be opposite to the first. The first and second wave-shaped surface may extend substantially orthogonally to the swelling direction **s** of the first cell stack **11A** and/or the relative distance between the first cell stack **11A** and the structure. The first wave-shaped surface may face the first cell stack **11A** and the second wave-shaped surface may face the structure.

In one example, the one or more resilient element may further comprise one or more resilient member **130D.** The one or more resilient member **130D** may be mounted to the wave spring **130D.** The one or more resilient member **130D** are in **FIG. 12A-B,** depicted as coil springs, but other types of readily available resilient members may be utilized.

The one or more resilient member **130D** may be arranged on first and/or second wave-shaped surface. The one or more resilient member **130D** may protrude outwards from the first and/or second wave-shaped surface.

In one example, one or more resilient member **130D** may be arranged on the first wave-shaped surface and may protrude outwards from said first wave-shaped surface towards the first cell stack **11A.** The one or more resilient member **130D** may be arranged at the first cell stack **11A** or the first plate **191** facing said cell stack **11A.** Advantageously, the one or more resilient member **130D** may be fixed to the first plate **191** facing the first cell stack **11A.**

In one example, one or more resilient member **130D** may be arranged on the second wave-shaped surface and may protrude outwards from said second wave-shaped surface towards the structure. The one or more resilient member **130D** may be arranged at the structure or the second end plate **192** facing said structure. Advantageously, the one or more resilient member **130D** may be fixed to the second plate **192** facing the structure.

Due to the one or more resilient member **130D** protruding from the wave spring **130C,** the one or more resilient member **130D** may deform first upon the first cell stack **11A** swelling in the swelling direction **s.** Upon the one or more resilient member **130D** being deformed, e.g. compressed, beyond a certain level, the wave spring **130D** will be engaged by the one or more resilient member **130D** or the first or second plate **191, 192,** causing the wave spring **130C** to be engaged and active. Thereby, the wave spring **130C** will also begin to be compressed and the stiffness will increase and the variable stiffness may thus be provided.

In one aspect, a cell swelling compensator, a battery system and a vehicle may be provided according to any of the following examples.

Example 1: A cell swelling compensator (100) for a battery unit (1), comprising one or more resilient elements (130) adapted to be arranged between a first cell stack (11A) and a structure of the battery unit (1) such that said cell swelling compensator (100) is arranged between the first cell stack (11A) and the structure for exerting a force onto first cell stack (11A) for compensating for cell swelling in the first cell stack (11A).

Example 2: Cell swelling compensator (100) of example 1, wherein the structure is a second cell stack (11B) of the battery unit (1), wherein the cell swelling compensator (100) is adapted to be arranged between said first and second cell stack (1 1A-B) for exerting a force onto the first and second cell stack (11A-B) for compensating for cell swelling in the first and second cell stack (1 1A-B) or wherein the structure is a housing (2) of the battery unit (1).

Example 3: Cell swelling compensator (100) of any of examples 1-2, wherein the one or more resilient elements (130) are adapted to provide a variable stiffness depending on the displacement of said one or more resilient elements (130).

Example 4: Cell swelling compensator (100) of example 3, wherein the one or more resilient elements (130) are adapted to provide an increased stiffness upon the compression of the one or more resilient elements (130) exceeding a compression threshold.

Example 5: Cell swelling compensator (100) of example 4, further comprising a plurality of resilient elements (130) arranged such that said resilient elements (130) are engaged at different levels of compression of a resilient structure formed by said resilient elements (130) to provide the increased stiffness at the compression threshold.

Example 6: Cell swelling compensator (100) of any of examples 3-5, wherein the one or more resilient elements (130) comprises a plurality of resilient elements (130) arranged such that the resilient elements (130) will start to deform at different relative distances between the first cell stack (11A) and the structure to provide the variable stiffness.

Example 7: Cell swelling compensator (100) of any of examples 1-6, wherein the one or more resilient elements (130) comprises a plurality of releasably interconnected resilient elements (130).

Example 8: Cell swelling compensator (100) of any of examples 1-7, further comprising a first plate (191) forming an end portion of the cell swelling compensator (100) and adapted to face the structure or the first cell stack (11A) of the battery unit (1).

Example 9: Cell swelling compensator (100) of any of examples 1-8, wherein the one or more resilient elements (130) comprises a plurality of leaf springs (130A) stacked on top of each other along a stacking axis (A).

Example 10: Cell swelling compensator (100) of example 9, wherein the plurality of leaf springs (130A) each comprises a curved portion (139) adapted to face the structure and the first cell stack (11A).

Example 11: Cell swelling compensator (100) of example 9 or 10, wherein the plurality of leaf springs (130A) are clamped together by means of one or more clamping members (160).

Example 12: Cell swelling compensator (100) of any of examples 9- 11, further comprising a mounting member (135) extending parallel to the stacking axis (A) and adapted to provide a stop for movement of the leaf springs (130A) stacked on top of each other in a direction extending orthogonally to said stacking axis (A).

Example 13: Cell swelling compensator (100) of any of examples 9-12, wherein the plurality of leaf springs (130A) comprises leaf springs with different curvatures and/or dimensions for providing a desired stiffness in response to the displacement of said leaf springs.

Example 14: Cell swelling compensator (100) of any of examples 9-13, wherein the one or more resilient elements (130) further comprises a first plurality of leaf springs (130A-1) stacked on top of each other along a first stacking axis (A1) and a second plurality of leaf springs (130A-2) stacked on top of each other along a second stacking axis (A2) coinciding with the first stacking axis (A1).

Example 15: Cell swelling compensator (100) of example 14, wherein the curved portion (139) of each of the second plurality of leaf springs (130A-2) is arranged in an opposite direction relative to the curved portion (139) of each of the first plurality of leaf springs (130A-1).

Example 16: Cell swelling compensator of any of example 9-15, wherein the one or more resilient members (130) further comprises one or more elastic bushing or coil spring (130B) arranged on an outer surface of the leaf springs (130A) stacked on top each other facing the structure or the first cell stack (11A).

Example 17: Cell swelling compensator of any of examples 1-8, wherein the one or more resilient element (130) comprises a leaf spring provided as a wave spring (130C).

Example 18: Cell swelling compensator of example 17, wherein the one or more resilient element (130) further comprises one or more resilient member (130D) mounted to the wave spring (130D).

Example 19: Cell swelling compensator of example 1, wherein the structure is a housing (2) of the battery unit (1), wherein the one or more resilient elements (130) are adapted to provide a variable stiffness depending on the displacement of said one or more resilient elements (130) and wherein the one or more resilient elements (130) are adapted to provide an increased stiffness upon the compression of the one or more resilient elements (130) exceeding a compression threshold, the cell swelling compensator (100) further comprising a plurality of resilient elements (130) arranged such that said resilient elements (130) are engaged at different levels of compression of a resilient structure formed by said resilient elements (130) to provide the increased stiffness at the compression threshold, the plurality of resilient elements (130) being arranged such that the resilient elements (130) will start to deform at different relative distances between the first cell stack (11A) and the housing (2) to provide the variable stiffness.

Example 20: A battery system comprising a first cell stack (11A) and a cell swelling compensator (100) of any of examples 1-19.

Example 21: A vehicle (50) comprising a battery system of example 20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cell swelling compensator (100) for a battery unit (1), comprising one or more resilient elements (130) adapted to be arranged between a first cell stack (11A) and a structure of the battery unit (1) such that said cell swelling compensator (100) is arranged between the first cell stack (11A) and the structure for exerting a force onto first cell stack (11A) for compensating for cell swelling in the first cell stack (11A).

2. Cell swelling compensator (100) of claim 1, wherein the structure is a second cell stack (11B) of the battery unit (1), wherein the cell swelling compensator (100) is adapted to be arranged between said first and second cell stack (1 1A-B) for exerting a force onto the first and second cell stack (1 1A-B) for compensating for cell swelling in the first and second cell stack (1 1A-B) or wherein the structure is a housing (2) of the battery unit (1).

3. Cell swelling compensator (100) of any of claims 1-2, wherein the one or more resilient elements (130) are adapted to provide a variable stiffness depending on the displacement of said one or more resilient elements (130).

4. Cell swelling compensator (100) of claim 3, wherein the one or more resilient elements (130) are adapted to provide an increased stiffness upon the compression of the one or more resilient elements (130) exceeding a compression threshold.

5. Cell swelling compensator (100) of claim 4, further comprising a plurality of resilient elements (130) arranged such that said resilient elements (130) are engaged at different levels of compression of a resilient structure formed by said resilient elements (130) to provide the increased stiffness at the compression threshold.

6. Cell swelling compensator (100) of any of claims 3-5, wherein the one or more resilient elements (130) comprises a plurality of resilient elements (130) arranged such that the resilient elements (130) will start to deform at different relative distances between the first cell stack (11A) and the structure to provide the variable stiffness.

7. Cell swelling compensator (100) of any of claims 1-6, wherein the one or more resilient elements (130) comprises a plurality of releasably interconnected resilient elements (130).

8. Cell swelling compensator (100) of any of claims 1-7, further comprising a first plate (191) forming an end portion of the cell swelling compensator (100) and adapted to face the structure or the first cell stack (11A) of the battery unit (1).

9. Cell swelling compensator (100) of any of claims 1-8, wherein the one or more resilient elements (130) comprises a plurality of leaf springs (130A) stacked on top of each other along a stacking axis (A).

10. Cell swelling compensator (100) of claim 8 or 9, wherein the plurality of leaf springs (130A) are clamped together by means of one or more clamping members (160).

11. Cell swelling compensator (100) of any of claims 9-10, further comprising a mounting member (135) extending parallel to the stacking axis (A) and adapted to provide a stop for movement of the leaf springs (130A) stacked on top of each other in a direction extending orthogonally to said stacking axis (A).

12. Cell swelling compensator of any of claim 9-11, wherein the one or more resilient members (130) further comprises one or more elastic bushing or coil spring (130B) arranged on an outer surface of the leaf springs (130A) stacked on top each other facing the structure or the first cell stack (11A).

13. Cell swelling compensator of any of claims 1-8, wherein the one or more resilient element (130) comprises a leaf spring provided as a wave spring (130C).

14. Cell swelling compensator of claim 13, wherein the one or more resilient element (130) further comprises one or more resilient member (130D) mounted to the wave spring (130D).

15. Cell swelling compensator of claim 1, wherein the structure is a housing (2) of the battery unit (1), wherein the one or more resilient elements (130) are adapted to provide a variable stiffness depending on the displacement of said one or more resilient elements (130) and wherein the one or more resilient elements (130) are adapted to provide an increased stiffness upon the compression of the one or more resilient elements (130) exceeding a compression threshold, the cell swelling compensator (100) further comprising a plurality of resilient elements (130) arranged such that said resilient elements (130) are engaged at different levels of compression of a resilient structure formed by said resilient elements (130) to provide the increased stiffness at the compression threshold, the plurality of resilient elements (130) being arranged such that the resilient elements (130) will start to deform at different relative distances between the first cell stack (11A) and the housing (2) to provide the variable stiffness.

## Amended claims

### Amended claims in accordance with Rule 137(2) EPC.

1. A cell swelling compensator (100) for a battery unit (1), comprising one or more resilient elements (130) adapted to be arranged between a first cell stack (11A) and a structure of the battery unit (1) such that said cell swelling compensator (100) is arranged between the first cell stack (11A) and the structure for exerting a force onto first cell stack (11A) for compensating for cell swelling in the first cell stack (11A), **characterized in that:**
the one or more resilient elements (130) comprises a plurality of leaf springs (130A) stacked on top of each other along a stacking axis (A).

2. Cell swelling compensator (100) of claim 1, wherein the structure is a second cell stack (11B) of the battery unit (1), wherein the cell swelling compensator (100) is adapted to be arranged between said first and second cell stack (11A-B) for exerting a force onto the first and second cell stack (11A-B) for compensating for cell swelling in the first and second cell stack (11A-B) or wherein the structure is a housing (2) of the battery unit (1).

3. Cell swelling compensator (100) of any of claims 1-2, wherein the one or more resilient elements (130) are adapted to provide a variable stiffness depending on the displacement of said one or more resilient elements (130).

4. Cell swelling compensator (100) of claim 3, wherein the one or more resilient elements (130) are adapted to provide an increased stiffness upon the compression of the one or more resilient elements (130) exceeding a compression threshold.

5. Cell swelling compensator (100) of claim 4, further comprising a plurality of resilient elements (130) arranged such that said resilient elements (130) are engaged at different levels of compression of a resilient structure formed by said resilient elements (130) to provide the increased stiffness at the compression threshold.

6. Cell swelling compensator (100) of any of claims 3-5, wherein the one or more resilient elements (130) comprises a plurality of resilient elements (130) arranged such that the resilient elements (130) will start to deform at different relative distances between the first cell stack (11A) and the structure to provide the variable stiffness.

7. Cell swelling compensator (100) of any of claims 1-6, wherein the one or more resilient elements (130) comprises a plurality of releasably interconnected resilient elements (130).

8. Cell swelling compensator (100) of any of claims 1-7, further comprising a first plate (191) forming an end portion of the cell swelling compensator (100) and adapted to face the structure or the first cell stack (11A) of the battery unit (1).

9. Cell swelling compensator (100) of any of claims 1-8, wherein the plurality of leaf springs (130A) are clamped together by means of one or more clamping members (160).

10. Cell swelling compensator (100) of any of claims 1-9, further comprising a mounting member (135) extending parallel to the stacking axis (A) and adapted to provide a stop for movement of the leaf springs (130A) stacked on top of each other in a direction extending orthogonally to said stacking axis (A).

11. Cell swelling compensator of any of claim 1-10, wherein the one or more resilient members (130) further comprises one or more elastic bushing or coil spring (130B) arranged on an outer surface of the leaf springs (130A) stacked on top each other facing the structure or the first cell stack (11A).

12. Cell swelling compensator of claim 1, wherein the structure is a housing (2) of the battery unit (1), wherein the one or more resilient elements (130) are adapted to provide a variable stiffness depending on the displacement of said one or more resilient elements (130) and wherein the one or more resilient elements (130) are adapted to provide an increased stiffness upon the compression of the one or more resilient elements (130) exceeding a compression threshold, the cell swelling compensator (100) further comprising a plurality of resilient elements (130) arranged such that said resilient elements (130) are engaged at different levels of compression of a resilient structure formed by said resilient elements (130) to provide the increased stiffness at the compression threshold, the plurality of resilient elements (130) being arranged such that the resilient elements (130) will start to deform at different relative distances between the first cell stack (11A) and the housing (2) to provide the variable stiffness.
